# EUROPÄISCHE PATENTSCHRIFT

(11) **EP 1 320 747 B1**
(45) Veröffentlichungstag und Bekanntmachung des Hinweises auf die Patenterteilung: **01.03.2006**
(21) Anmeldenummer: 01976172.5
(22) Anmeldetag: 30.08.2001
(51) Int. Cl.: G01N 27/447, B01D 57/02, C07K 1/28

(54) **MEDIUM FÜR ANALYTISCHE UND PRÄPARATIVE ELEKTROPHORESE**
MEDIUM FOR ANALYTIC AND PREPARATIVE ELECTROPHORESIS
SUBSTANCE POUR ELECTROPHORESE ANALYTIQUE ET EXPERIMENTALE

(30) Priorität: 21.09.2000 DE 10047088
(43) Veröffentlichungstag der Anmeldung: 25.06.2003
(73) Patentinhaber: Weber, Gerhard, 85551 Kirchheim (DE)
(72) Erfinder: Weber, Gerhard, 85551 Kirchheim (DE)
(74) Vertreter: Weber, Thomas
(86) Internationale Anmeldenummer: PCT/EP2001/010036
(87) Internationale Veröffentlichungsnummer: WO 2002/025263

(56) Entgegenhaltungen:
- US-A- 4 139 440
- US-A- 4 279 724
- US-A- 4 334 972
- US-A- 5 447 612
- US-A- 5 817 225
- SVENSSON H.: "Isoelectric Fractionation, Analysis, and Characterization of Ampholytes in Natural pH Gradients. I. The Differential Equation of Solute Concentrations at a Steady State and its Solution for Simple Cases" ACTA CHEM. SCAND., Bd. 15, Nr. 2, 1961, Seiten 325-341, SCHWEDEN
- SVENSSON H.: "Isoelectric Fractionation, Analysis, and Characterization of Ampholytes in Natural pH Gradients. II. Buffering Capacity and Conductance of Isoionic Ampholytes" ACTA CHEM. SCAND., Bd. 16, Nr. 2, 1962, Seiten 456-466, SCHWEDEN

## Beschreibung

Die Erfindung betrifft ein Medium für isoelektrische Fokussierung.

Derartige wässrige Lösungen, die unter Hochspannungselektrophorese einen pH-Gradienten bilden, werden in großem Umfang in der Analytik von Proteinen und Peptiden verwendet. Deratige bekannte Lösungen enthalten Polyelektrolyte mit amphoteren Eigenschaften und werden üblicherweise synthetisch durch Kondensation bzw. Polymerisation von Polyaminen mit ungesättigten Carbonsäuren hergestellt. Bei dieser Synthese entsteht eine Vielzahl von Verbindungen unterschiedlichen Molekulargewichts und unterschiedlicher Anzahl von sauren Gruppen (Carboxyl-Gruppen) und basischen Gruppen (Amino- bzw. Iminogruppen). Unter den Bedingungen der Hochspannungselektrophorese ordnen sich diese Polyelektrolyte aufgrund des unterschiedlichen Verhältnis der sauren und basischen Gruppen derart an, daß diese Polyelektrolyte mit besonders sauren Eigenschaften im Nahbereich der Anode konzentriert und alle weiteren Polyelektrolyte gemäß der "Rangordnung" der sauren bzw. basischen Eigenschaften zwischen den Elektroden angeordnet und dabei auch konzentriert werden. Durch die selektive Anreicherung der Polyelektrolyte gemäß den sauren bzw. basischen Eigenschaften der einzelnen Spezies wird ein pH-Gradient innerhalb der gesamten wässrigen Lösung erzeugt.

Mittels dieses pH-Gradienten können amphotere Verbindungen wie Proteine und Peptide nach den unterschiedlichen sauren bzw. basischen Eigenschaften getrennt werden. Dieses analytische Trennverfahren wird in der Literatur als "Isoelektrische Fokussierung" bezeichnet. Wird dieses Verfahren in einem speziellen Gel (Poylacrylamid) durchgeführt, so wird dieses Verfahren als PAGIEF (IEF auf Polyacrylamidgel) bezeichnet und gilt als das Standardverfahren.

Die bei der Synthese der handelsüblichen Ampholyte verwendeten ungesättigten Säuren, z.B. substituierte Acrylsäuren, sind hochgiftig und deren Restgehalt wird als sehr bedenklich angesehen.

Aus diesem Grund ist die Verwendung von kommerziellen Ampholyten zur Reinigung von Proteinen verboten, die später human appliziert werden sollen.

Bei der Synthese der Ampholyte entsteht eine Vielzahl chemischer Spezies unbekannter Struktur, deren relative Konzentration je nach Batch stark variieren kann. Dadurch wird aber die Reproduzierbarkeit der analytischen Ergebnisse negativ beeinflußt.

Bei bestimmten Applikationen werden über "artifizielle Banden" als Folge einer unerwünschten Komplexbildung zwischen Ampholyt und Analyt berichtet.

Über die teilweise Störung der analytischen Färbereaktion der Proteine durch Ampholyte mit höherem Molekulargewicht wird ebenfalls berichtet. über einen ungewöhnlich hohen Anteil von Ampholyten mit MG >10 KD in Produkten bestimmter Hersteller wurde mehrmals berichtet.

Im Falle einer präparativen Reinigung von Proteinen ist die nachfolgende Abtrennung des Ampholyten schwierig und manchmal unvollkommen; als mögliche Ursache wird hier Komplexbildung vermutet.

Kommerzielle Ampholyte haben sich als Trennmedien für Biopartikel als nicht geeignet erwiesen, da die Biopartikel in diesen Medien aggregieren.

Aufgabe der Erfindung ist es, wässrige Lösungen für isoelektrische Fokussierung (IF) mit Gehalt an Säuren und Basen unterschiedlicher pKₛ Werte zur Verfügung zu stellen, die die aufgezeigten Nachteile nicht aufweisen, und deren Anwendungsbereich dadurch erheblich verbreitert wird.

Die erfindungsgemäße Aufgabe wird durch die wässrige Lösung nach Anspruch 1 gelöst. Weitere vorteilhafte Ausgestaltungen ergeben sich aus den nachfolgenden Ansprüchen 2 bis 9. Eine wässrige Lösung gemäß dem Oberbegriff des Anspruchs 1 wird beschrieben von Svensson in Acta Chem. Scand. 15 (1961), S. 325-341.

Die erfindungsgemäße wässrige Lösung enthält ein Gemisch von Säuren und Basen mit abgestufter "Acidität" bzw. "Basizität". Die pKₛ-Werte der einzelnen Säuren variieren im Bereich von pKₛ 3.5 bis pKₛ 12 und die Differenzen der pKₛ₋Werte (ΔpKₛ) der "benachbarten" Säuren sollen nicht größer sein als ΔpKₛ =1. Als ideal gilt ein Wert von ΔpKₛ <0.8.

Die pKₛ-Werte der verwendeten Basen variiert im Bereich von pKₛ = 1.5 bis pKₛ = 11. Die Differenzen der Werte der einzelnen Basen sind ideal, wenn ΔpKₛ <0.8 erfüllt ist.

Die Anzahl der verwendeten Säuren bzw. der Basen und deren relative Konzentrationen bestimmen die Spanne und das Profil des pH-Gradienten. Die Mindestanzahl beträgt je 3 Säuren bzw. 3 Basen. Im Falle eines weiten pH-Bereichs (pH 2.5 bis 10) werden 11 Säuren und 13 Basen mit abgestuften Werten des pKₛ verwendet.

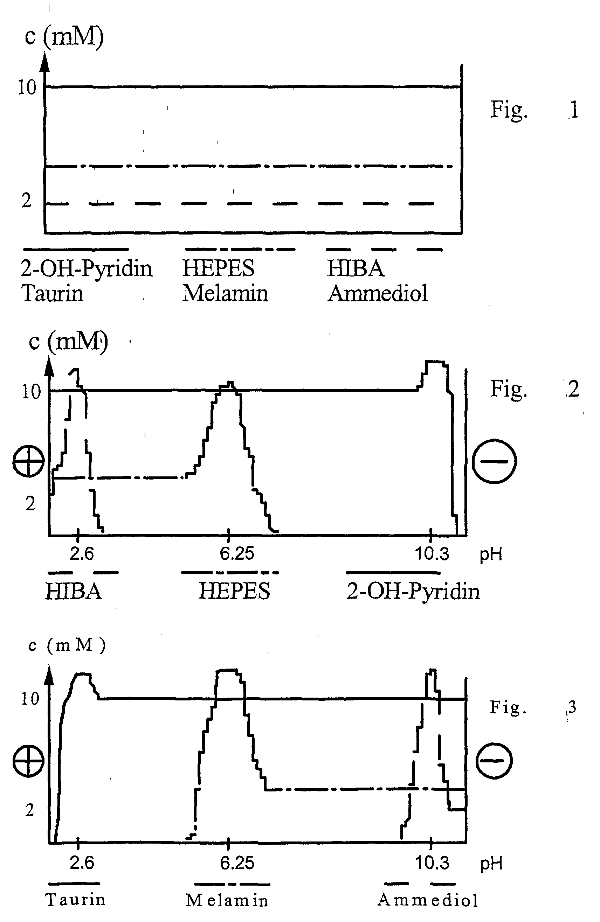

In den beiliegenden Figuren 1 bis 3 wird am Modellbeispiel von je 3 typischen Säuren und Basen die elektrophoretische Wanderung und daraus resultierend die Bildung des pH-Gradienten beschrieben. Folgende Säuren: Hydroxybuttersäure (HIBA (pKₛ = 3.8), HEPES (pKₛ = 7.5) und 2-Hydroxypyridin (pKₛ = 11.6) und folgende Basen: Taurin (pKₛ = 1.5), Melamin (pKₛ = 5) und Ammediol (pKₛ = 9) sind in unterschiedlichen Konzentrationen in der Ausgangslösung vorhanden (siehe Figur 1). Es gilt die Regel, daß die relativen Konzentrationen sowohl der sehr schwachen Säuren und der sehr schwachen Basen deutlich erhöht sind im Vergleich zu den Konzentrationen der relativ starken Säuren und Basen (ca. Faktor 5). Die Konzentrationen von Säuren und Basen "mäßiger Stärke" sind ca. um den Faktor 1.5 bis max. 3 erhöht.

In den Figuren 2 und 3 werden die relativen Konzentrationen der oben beschriebenen Säuren und Basen nach der elektrophoretischen Wanderung dargestellt. In dem dargestellten "Gleichgewichtszustand" werden "Pärchen" von Säuren und Basen gebildet, die sich gegenseitig nur in sehr geringem Maß ionisieren können (starke Säure-HIBA + sehr schwache Base-Taurin, schwache Säure-HEPES + schwache Base-Melamin und starke Base-Ammediol + sehr schwache Säure-2OH-Pyridin) und damit kommt die elektrophoretische Wanderung der medieneigenen Substanzen zum Erliegen. Im Bereich dieser Pärchen wird jeweils ein pH-Wert generiert, der dem arithmetischen Mittelwerte der pKₛ-Werte der Säure und Base entspricht. Die pH-Werte dieser Pärchen sind demnach: HIBA/Taurinlösung pH = 2.6, HEPES/Melamin pH = 6.25, 2-OH-Pyridin/Ammediol pH = 10.3. Die pH-Spanne, in der ein Pärchen einen stabilen pH-Wert garantieren kann, ist ca. 1 pH-Einheit. Alle weiteren Säuren und Basen mit verschiedenen pKₛ-Werten bilden Pärchen; die ebenfalls innerhalb einer pH-Einheit einen stabilen pH-Wert garantieren, sofern die absoluten Konzentrationen der einzelnen Säuren und Basen eine genügende Pufferkapazität im Gleichgewichtszustand garantieren.

Die erfindungsgemäßen Lösungen bestehen aus wohldefinierten Chemikalien, deren Eigenschaften im Detail bekannt sind. Die Reproduzierbarkeit der gesamten Mischung ist garantiert durch die Präzision' bzw. Genauigkeit der zur Herstellung verwendeten Waage. Die verwendeten Substanzen sind nicht toxisch. Jede der verwendeten Substanzen ist "monofunktionell", d.h. Effekte wie Komplexbildung bzw. die Aggregation von Biopolymeren nicht vorhanden oder zumindest deutlich reduziert sind im Vergleich zu Polyelektrolyten mit mehreren funktionellen Gruppen. Das Molekulargewicht aller einzelnen Spezies der Mischung beträgt <300 u (300 Dalton).

Die erfindungsgemäßen wässrigen Lösungen wurden bereits erfolgreich als Trennmedien für Biopolymere und Biopartikel getestet und als biokompatibel befunden. Da die meisten einzelnen Spezies durch Chemikalien mit ähnliche pKₛ-Werten ersetzt werden können, können spezielle Anforderungen von Biopartikeln an das Trennmedium durch die Abänderung der Zusammensetzung der Mischung berücksichtigt werden. Aus diesen Gründen erscheint die behördliche Zulassung dieser Lösungen für die Reinigung von Biopartikeln und Biopolymeren (Peptide und Proteine) für spätere humane Applikation möglich.

Im folgenden wird eine beispielhafte wässrige Lösung gemäß Erfindung vorgestellt. Hierbei ist zu beachten, daß bei Herstellung eines Mediums für einen engeren pH-Intervall die absoluten Konzentrationen der Säuren und Basen erhöht werden; inder Regel werden auch die Differenzen der pKₛ-Werte durch Verwendung neuer Bestandteile verkleinert.

**Beispiel (pH-Intervall 5,5-7,5)**

| | | | | | |
|---|---|---|---|---|---|
| MOPSO | 6.9 | 10 | EACA | 4.4 | 15 |
| MOPS | 7.2 | 10 | Creatinin | 4.8 | 15 |
| HEPES | 7.5 | 15 | Hydroxyethylpyridin | 5.4 | 10 |
| EPPS | 8.0 | 15 | β - Picolin | 5.8 | 10 |
| TAPS | 8.3 | 20 | BISTRIS | 6.5 | 5 |

Im angegebenen Medium wird ein weitgehend linearer pH-Gradient erzeugt. Das pH-Profil kann in bestimmten pH-Bereichen abgeflacht werden, indem die relativen Konzentrationen der Säuren und Basen verändert werden. Bei der Herstellung der erfindungsgemäßen Lösungen ist im Regelfall die Reihenfolge der Zugabe der Einzelverbindungen ohne Bedeutung.

## Patentansprüche

1. Medium für analytische und präparative isoelektrische Fokussierung mit Gehalt an Säuren und Basen unterschiedlicher pKs-Werte, mit einem
Gehalt an mindestens 3 Säuren, deren pKs-Werte zwischen 3,0 bis 12 liegen, wobei die Differenz der pKs-Werte (Delta pKs) benachbarter Säuren nicht größer als 1 ist und mindestens 3 Basen, deren pKs-Werte zwischen 1,5 bis 11 liegen, wobei die Differenz der pKs-Werte (Delta pKs) benachbarter Basen nicht größer als 1 ist, **dadurch gekennzeichnet dass**
das Medium mindestens eine Säure und mindestens eine Base aufweist, deren jeweiliger pKs-Wert eine Differenz von 1 bis 3 im Vergleich zu dem pKs-Wert der stärksten Säure bzw. stärksten Base aufweist, und wobei
verglichen mit den Konzentrationen der stärksten Säure und stärksten Base die Konzentrationen von schwächeren Säuren und von schwächeren Basen, deren pKs-Werte eine Differenz von 1 bis 3 im Vergleich zu den pKs-Werten der stärksten Säure bzw. stärksten Base aufweisen, um einen Faktor von etwa 1,5 bis 3 erhöht sind, und die Konzentrationen von schwächeren Säuren und von schwächeren Basen, deren pKs-Werte eine Differenz von 3 bis 8 im Vergleich zu den pKs-Werten der stärksten Säure bzw. stärksten Base aufweisen, um einen Faktor von etwa 4 bis 8 erhöht sind.

2. Medium nach Anspruch 1, wobei das Medium weiter mindestens eine Säure und mindestens eine Base aufweist, deren jeweiliger pKs-Wert eine Differenz von 3 bis 8 im Vergleich zu dem pKs-Wert der stärksten Säure und stärksten Base aufweist.

3. Medium nach einem der Ansprüche 1 oder 2, **gekennzeichnet durch** eine Differenz der pKs-Werte (Delta pKs) benachbarter Säuren von 0,8 bis 0,5.

4. Medium nach einem der vorhergehenden Ansprüche, **gekennzeichnet durch** eine Differenz der pKs-Werte (Delta pKs) benachbarter Basen von 0,8 bis 0,5.

5. Medium nach einem der vorhergehenden Ansprüche, **dadurch gekennzeichnet, dass** es Säuren und Basen enthält, die nach elektrophoretischer Wanderung Säure/Basen-Pärchen ausbilden, die einen pH-Wert generieren, der dem arithmetischen Mittelwerte der pKs-Werte der entsprechenden Säure und der entsprechenden Base entspricht.

6. Medium nach einem der vorhergehenden Ansprüche, **dadurch gekennzeichnet, dass** es Konzentrationen der einzelnen Säuren und Basen enthält, die zur Einstellung und Erhaltung einer ausreichenden Pufferkapazität im Gleichgewichtszustand nach elektrophoretischer Wanderung ausreichen.

7. Medium nach einem der vorhergehenden Ansprüche, **dadurch gekennzeichnet, dass** zur Einstellung engerer pH Intervalle die absoluten Konzentrationen der Säuren und Basen erhöht sind.

8. Medium nach Anspruch 7, **dadurch gekennzeichnet, dass** die ΔpKs-Werte der Säuren und Basen durch deren entsprechende Auswahl verkleinert sind.

9. Medium nach einem der vorhergehenden Ansprüche, **dadurch gekennzeichnet, dass** die Molekulargewichte der jeweils eingesetzten Säuren bzw. Basen kleiner 300 u (kleiner 300 Dalton) sind.

## Claims

1. A medium for analytical and preparative isoelectric focusing containing acids and bases with different pK_{S} values and containing at least 3 acids whose pK_{S} values are between 3.0 and 12, wherein the difference between the pK_{S} values (ΔpK_{S}) of acids with neighboring pK_{S} values is not larger than 1, and at least 3 bases whose pK_{S} values are between 1.5 and 11, wherein the difference between the pK_{S} values (ΔpK_{S}) of bases with neighboring pK_{S} values is not larger than 1, **characterized in that** said medium contains at least one acid and at least one base whose respective pKₛ values have a difference of from 1 to 3 from the pKₛ values of the strongest acid or strongest base, respectively, and wherein, as compared to the concentrations of the strongest acid and strongest base, the concentrations of weaker acids and weaker bases whose pK_{S} values have a difference of from 1 to 3 from the pK_{S} values of the strongest acid or strongest base, respectively, are increased by a factor of from about 1.5 to 3, and the concentrations of weaker acids and weaker bases whose pK_{S} values have a difference of from 3 to 8 from the pK_{S} values of the strongest acid or strongest base, respectively, are increased by a factor of from about 4 to 8.

2. The medium according to claim 1, wherein said medium further contains at least one acid and at least one base whose respective pK_{S} value has a difference of from 3 to 8 from the pK_{S} values of the strongest acid or strongest base, respectively.

3. The medium according to either of claims 1 or 2, **characterized by** a difference between the pK_{S} values (ΔpK_{S}) of acids with neighboring pK_{S} values of from 0.8 to 0.5.

4. The medium according to any of the preceding claims, **characterized by** a difference between the pK_{S} values (ΔpK_{S}) of bases with neighboring pK_{S} values of from 0.8 to 0.5.

5. The medium according to any of the preceding claims, **characterized by** containing acids and bases which, upon completion of electrophoretic migration, form acid/base pairs which produce a pH value which corresponds to the arithmetic mean of the pK_{S} values of the respective acid and the respective base.

6. The medium according to any of the preceding claims, **characterized by** containing concentrations of the individual acids and bases which are sufficient for establishing and maintaining a sufficient buffer capacity in a state of equilibrium upon completion of electrophoretic migration.

7. The medium according to any of the preceding claims, **characterized in that**, in order to establish narrower pH intervals, the absolute concentrations of the acids and bases are increased.

8. The medium according to claim 7, **characterized in that** the acids and bases are selected to have reduced ΔpKₛ values.

9. The medium according to any of the preceding claims, **characterized in that** the molecular weights the respectively employed acids and bases are less than 300 u (less than 300 Dalton).

## Revendications

1. Milieu pour la focalisation isoélectrique analytique et préparative, contenant des acides et des bases ayant des valeurs de pKa différentes, contenant au moins 3 acides dont les valeurs de pKa se situent dans la plage de 3,0 à 12, la différence des valeurs de pKa (delta pKa) d'acides voisins n'étant pas supérieure à 1, et au moins 3 bases dont les valeurs de pKa se situent dans la plage de 1,5 à 11, la différence des valeurs de pKa (delta pKa) de bases voisines n'étant pas supérieure à 1,
**caractérisé en ce que**
le milieu présente au moins un acide et au moins une base dont la valeur de pKa respective présente une différence de 1 à 3 par rapport à la valeur de pKa de l'acide le plus fort ou de la base la plus forte, et
comparées aux concentrations de l'acide le plus fort et de la base la plus forte, les concentrations des acides les plus faibles et des bases les plus faibles dont les valeurs de pKa présentent une différence de 1 à 3 par rapport aux valeurs de pKa de l'acide le plus fort ou de la base la plus forte sont augmentées d'un facteur 1,5 à 3 environ, et les concentrations des acides les plus faibles et des bases les plus faibles dont les valeurs de pKa présentent une différence de 3 à 8 par rapport aux valeurs de pKa de l'acide le plus fort ou de la base la plus forte sont augmentées d'un facteur 4 à 8 environ.

2. Milieu selon la revendication 1, dans lequel le milieu présente en plus au moins un acide et au moins une base dont la valeur de pKa respective présente une différence de 3 à 8 par rapport à la valeur de pKa de l'acide le plus fort et de la base la plus forte.

3. Milieu selon la revendication 1 ou la revendication 2, **caractérisé par** une différence des valeurs de pKa (delta pKa) d'acides voisins de 0,8 à 0,5.

4. Milieu selon l'une des revendications précédentes, **caractérisé par** une différence des valeurs de pKa (delta pKa) de bases voisines de 0,8 à 0,5.

5. Milieu selon l'une des revendications précédentes, **caractérisé en ce qu'**il contient des acides et des bases qui, après migration électrophorétique, forment des paires acide/base qui génèrent une valeur de pH correspondant aux moyennes arithmétiques des valeurs de pKa de l'acide correspondant et de la base correspondante.

6. Milieu selon l'une des revendications précédentes, **caractérisé en ce qu'**il contient des concentrations des différents acides et bases qui sont suffisantes pour établir et maintenir une capacité de tamponnement suffisante à l'état d'équilibre après la migration électrophorétique.

7. Milieu selon l'une des revendications précédentes, **caractérisé en ce que**, pour ajuster des intervalles de pH plus étroits, les concentrations absolues des acides et des bases sont augmentées.

8. Milieu selon la revendication 7, **caractérisé en ce que** les valeurs de pKa des acides et des bases sont réduites par un choix correspondant desdits acides et bases.

9. Milieu selon l'une des revendications précédentes, **caractérisé en ce que** les masses moléculaires des acides ou bases utilisé(e)s sont inférieures à 300 u (inférieures à 300 daltons).
